Europäisches Patentamt

European Patent Office

Office européen des brevets

(11) Veröffentlichungsnummer: **0 172 264**
**A1**

(12) # EUROPÄISCHE PATENTANMELDUNG

(21) Anmeldenummer: **84109898.1**

(22) Anmeldetag: **20.08.84**

(51) Int. Cl.⁴: **F 24 D 3/08**
**F 24 F 5/00**

(43) Veröffentlichungstag der Anmeldung:
**26.02.86 Patentblatt 86/9**

(84) Benannte Vertragsstaaten:
**AT CH DE FR GB IT LI**

(71) Anmelder: **Spens, Henrik M.**
**Av. Melian 2176**
**1430 Buenos Aires(AR)**

(72) Erfinder: **Spens, Henrik M.**
**Av. Melian 2176**
**1430 Buenos Aires(AR)**

(74) Vertreter: **Ryffel, Rolf**
**c/o Hepp Ryffel AG Bahnhofstrasse 58**
**CH-8001 Zürich(CH)**

(54) **Heizanlage.**

(57) Die Heizanlage dient zum Heizen wenigstens eines Raumes in einem Gebäude, welcher Raum ein doppelt verglastes Fenster aufweist. Im Fensterrahmen (3, 4, 5) sind unten und oben Oeffnungen (6, 7) vorhanden, die in den Zwischenraum zwischen den Glasscheiben (1, 2) führen. Unter den unteren Oeffnungen (6) ist ein mit Warmwasser speisbarer Heizkörper (8) angeordnet. Von dem Heizkörper (8) erwärmte Luft steigt durch die Oeffnungen (6, 7) im Fensterrahmen (3, 4, 5) und den Zwischenraum zwischen den Glasscheiben (1, 2) nach oben. Dadurch wird die dem Raum zugekehrte Glasscheibe (2) auf einer Temperatur gehalten, welche Behaglichkeit für Personen in dem Raum gewährleistet. Die Lufttemperatur im Raum und damit der Energieverbrauch können niedriger sein. Der Heizkörper (8) ist im Kreislauf an einen Boiler angeschlossen, der ohnehin für die Lieferung von warmem Brauchwasser vorhanden ist. Dadurch sind die Anlagekosten niedrig.

EP 0 172 264 A1

./...

Fig. 1

## Heizanlage

Die bekannten Zentralheizungsanlagen mit Heizkörpern in verschiedenen Räumen eines Gebäudes und einem zentral angeordneten Kessel sind relativ teuer sowohl in der Anschaffung als auch im Betrieb (Energieverbrauch). Man kann zwar den Heizkessel gleichzeitig auch für die Erzeugung von warmem Brauchwasser verwenden, indem man darin einen Boiler anordnet, der dann keine eigene Heizeinrichtung benötigt, doch ist der Betrieb einer solchen Kombination ausserhalb der Heizperioden bekanntlich unwirtschaftlich

Die Aufgabe der Erfindung besteht darin, eine Heizanlage zur Verfügung zu stellen, die aus wenigen einfachen Teilen billig hergestellt werden kann und mit der Energieeinsparungen möglich sind.

Die Aufgabe wird erfindungsgemäss gelöst mit einer Heizanlage zum Heizen wenigstens eines Raumes in einem Gebäude, welcher Raum wenigstens ein doppelt oder mehrfach verglastes Fenster aufweist, welche Heizanlage dadurch gekennzeichnet ist, dass im Fensterrahmen unten und oben Oeffnungen vorhanden sind, die in den Zwischenraum zwischen zwei Glasscheiben führen, dass unter den unteren Oeffnungen ein mit Warmwasser speisbarer Heizkörper angeordnet ist und dass der Heizkörper im Kreislauf an einen Boiler für warmes Brauchwasser angeschlossen ist.

Die Heizanlage kann also den Boiler für warmes Brauchwasser mitverwenden, der z.B. in einer Wohnung in der Regel ohnehin erforderlich ist (für Küche, Bad, Dusche usw.). Der Boiler kann zweckmässig ein Gasboiler sein, insbesondere in Gegenden, wo Erdgas zur Verfügung steht.

Der Heizkörper kann in einfacher Weise aus einem Metallrohr in Form einer Schlange oder einer Spirale bestehen, welches Rohr mit dem Boiler über isolierende Kunststoffrohre verbunden sein kann. Es ist bekannt, dass die Behaglichkeit in einem geheizten Raum nicht nur von der Lufttemperatur im Raum abhängt, sondern auch von der Temperatur der den Raum begrenzenden Oberflächen. In der Regel haben die Fensteroberflächen die niedrigste Temperatur, weil selbst Fenster mit Mehrfach- und/oder Isolierverglasung eine geringere Wärmeisolationswirkung aufweisen als die festen Raumaussenwände. Bei der erfindungsgemässen Heizanlage kann Luft, die vom Heizkörper erwärmt wird, von unten in den Zwischenraum zwischen zwei Glasscheiben des Fensters eindringen und die dem Raum zugekehrte Glasscheibe auf einer die Behaglichkeit im Raum gewährleistenden Temperatur halten, so dass die Lufttemperatur im Raum nicht hoch zu sein braucht. Die Leistung des Heizkörpers muss daher nicht hoch sein, und der Energieverbrauch kann entsprechend der niedrigeren Lufttemperatur im Raum reduziert sein.

Ausführungsbeispiele der erfindungsgemässen Heizanlage werden nachstehend anhand der Zeichnungen näher erläutert. In diesen zeigen:

Fig. 1 einen Vertikalschnitt durch ein Fenster mit Heizkörper und

Fig. 2 ein Schema einer ganzen Heizanlage.

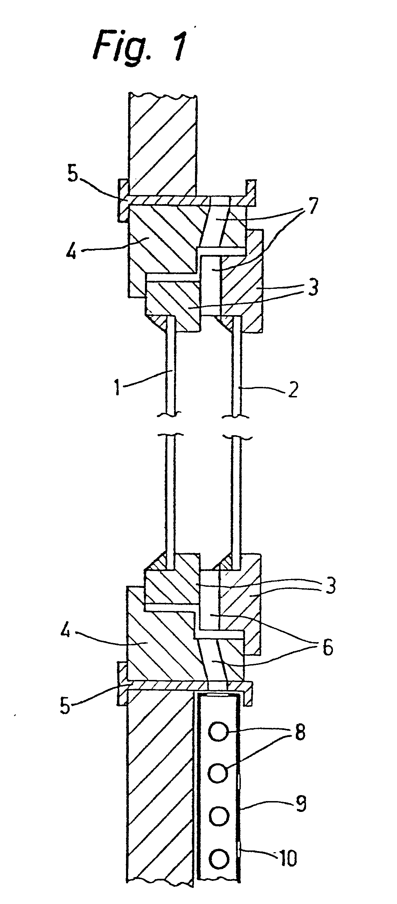

Die Fig. 1 zeigt ein Gebäudefenster mit zwei Glasscheiben 1 und 2, einem Flügelrahmen 3 und einem Blindrahmen 4. Die beiden Rahmen 3 und 4 können, obwohl sie massiv dargestellt sind, zweckmässig aus geeigneten Kunststoff-Hohlprofilen bestehen. Der Blindrahmen 4 ist in einen äusseren Metallrahmen 5 eingesetzt, so dass das ganze Fenster mit den Glasscheiben 1 und 2 und den Rahmen 3 und 4 für allfällige Reparaturen oder Ersatz leicht ausgebaut werden kann.

Die Rahmen 3, 4 und 5 weisen unten und oben durchgehende Oeffnungen in Form von Löchern oder Schlitzen 6 bzw. 7 auf, die den Zwischenraum zwischen den beiden Glasscheiben 1 und 2 mit dem Raum im Gebäude verbinden. Unter den unteren Oeffnungen 6 ist ein mit Warmwasser speisbarer Heizkörper angeordnet, der aus einem Metallrohr 8 in Form einer Schlange oder einer Spirale besteht. Der Heizkörper 8 ist in einer Verkleidung 9 angeordnet, die auf der dem Raum zugekehrten Seite geeignete Durchbrechungen 10 aufweist und unter den Oeffnungen 6 offen ist, so dass Luft aus dem Raum zum Heizkörper gelangt, von diesem erwärmt wird und dann in den Zwischenraum zwischen den Glasscheiben 1 und 2 aufsteigt. Die warme Luft hält die dem Raum zugekehrte Glasscheibe 2 auf einer Temperatur, die eine gewünschte Behaglichkeit für Personen gewährleistet, die sich im Raum aufhalten.

Zur Verbesserung des Wärmeüberganges vom Heizkörper bzw. Rohr 8 auf die nach oben steigende Luft und der Führung dieser Luft zu den unteren Oeffnungen 6 des Fensterrahmens kann am Heizkörper (Rohrschlange oder -spirale) ein Wärmeübertragungsblech (nicht dargestellt) angebracht sein, das sich nach oben zu den Oeffnungen 6 erstreckt.

Das beschriebene Fenster kann wie ein normales Fenster geöffnet und geschlossen werden; natürlich können aber auch fest eingebaute Fenster in entsprechender Weise für den Durchtritt von Warmluft ausgebildet werden. Damit das Fenster nicht zu oft geöffnet werden muss, kann es vorteilhaft sein, in dem Fenster oder in einer anderen Raumwand einen Ventilator für die Erneuerung der Raumluft anzuordnen.

Die äussere Glasscheibe 1 ist ebenfalls als einfache Scheibe gezeichnet. Um die Wärmeverluste gering zu halten, kann man aber natürlich anstelle der einfachen Glasscheibe 1 zweckmässig eine Isolierverglasung mit zwei oder drei Glasscheiben anordnen.

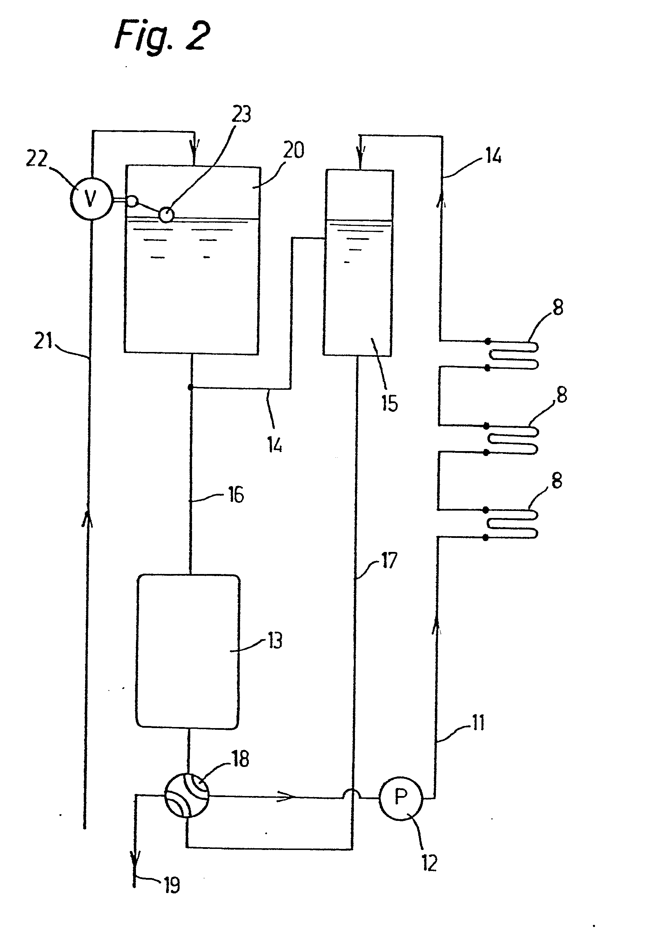

Die ganze Heizanlage zum Heizen wenigstens eines ein Fenster gemäss Fig. 1 aufweisenden Raumes in einem Gebäude ist in Fig. 2 schematisch dargestellt. Gemäss Fig. 2 sind mehrere Heizkörper 8, die unter Fenstern gemäss Fig. 1 angeordnet sind, über eine Vorlaufleitung 11, in der eine Pumpe 12 angeordnet ist, mit einem Boiler 13, insbesondere Gasboiler, verbunden. Eine Rücklaufleitung 14 führt von den Heizkörpern 8 über einen Wasserspeicher 15 in eine Boilerspeiseleitung 16. Die Leitungen 11, 14 und 16 bestehen aus isolierenden Kunststoffrohren, und auch der Wasserspeicher 15 ist isoliert, um Wärmeverluste zu vermeiden. Das Wasser im Wasserspeicher 15, das von Heizkörpern kommt, ist noch warm genug, um als Brauchwasser für Küche, Bad, Dusche usw. verwendet werden zu können. Brauchwasser kann aus dem Wasserspeicher 15 über eine Leitung 17, einen Vierwegehahn 18 und eine Leitung 19, die zu nicht dargestellten Verbrauchsstellen führt, entnommen werden.

Das warme Wasser aus dem Boiler 13 wird also zuerst für die Wärmeabgabe in den Heizkörpern 8 und dann als warmes Brauchwasser verwendet. Auch diese doppelte Ausnutzung kann eine Energieeinsparung ermöglichen.

Damit das Wasser im Wasserspeicher 15 nicht zu kalt für die Verwendung als warmes Brauchwasser werden kann, kann man einen Temperaturfühler zum Feststellen der Temperatur des Wassers im Wasserspeicher 15 anordnen, welcher Temperaturfühler in Abhängigkeit von dieser Temperatur einen Regler für die Boilerheizeinrichtung, z.B. Gasbrenner, beeinflusst oder steuert (nicht dargestellt).

Ein zusätzlicher mit Warmwasser speisbarer Heizkörper, ähnlich ausgebildet und angeschlossen wie die Heizkörper 8, kann gewünschtenfalls getrennt von Raumfenstern für sich aufgestellt werden, so dass er zum Trocknen von Wäsche verwendet werden kann.

Im Sommer, wenn keine Heizung benötigt wird,

ist der Heizwasserkreislauf durch die Heizkörper 8 und die Leitungen 11, 14 ausser Betrieb. Die Pumpe 12 ist ausgeschaltet, und der Vierwegehahn 18 steht in einer um 90° gedrehten Stellung, so dass warmes Brauchwasser direkt aus dem Boiler 13 in die Leitung 19 gelangen kann.

Gewünschtenfalls kann man im Sommer kaltes oder gekühltes Wasser im Kreislauf durch die Heizkörper 8 zirkulieren lassen (nicht dargestellt), um den Raum im Gebäude zu kühlen.

Die Speisung des Boilers 13 mit Kaltwasser, durch die Speiseleitung 16, erfolgt im dargestellten Ausführungsbeispiel aus einem Wassertank 20, der im Dachstock (oder auf dem Dach) des Gebäudes angeordnet sein kann. Den Tank 20 speist eine Kaltwasserleitung 21, in der ein Absperrorgan 22 angeordnet ist, welches von einem im Tank angeordneten Schwimmer 23 gesteuert ist.

Der Boiler 13 ist wie erwähnt vorzugsweise ein Gasboiler. Selbstverständlich können aber stattdessen, je nach den örtlichen Gegebenheiten und der benötigten Heizleistung, auch Boiler zum Einsatz kommen, in denen das Wasser mit anderen Energieformen aufgeheizt wird, z.B. direkt mit Sonnenenergie, mit durch Windkraft erzeugter elektrische Energie und/ /oder mittels Wärmepumpe.

Patentansprüche

1. Heizanlage zum Heizen wenigstens eines Raumes in einem Gebäude, welcher Raum wenigstens ein doppelt oder mehrfach verglastes Fenster aufweist, dadurch gekennzeichnet, dass im Fensterrahmen (3, 4, 5) oben und unten Oeffnungen (6,7) vorhanden sind, die in den Zwischenraum zwischen zwei Glasscheiben (1, 2) führen, dass unter den unteren Oeffnungen (6) ein mit Warmwasser heizbarer Heizkörper (8) angeordnet ist und dass der Heizkörper (8) im Kreislauf (11, 14) an einen Boiler (13) für warmes Brauchwasser angeschlossen ist.

2. Heizanlage nach Anspruch 1, dadurch gekennzeichnet, dass der Boiler (13) ein Gasboiler ist.

3. Heizanlage nach Anspruch 1 oder 2, dadurch gekennzeichnet, dass der Heizkörper (8) aus einem Metallrohr in Form einer Schlange oder einer Spirale besteht.

4. Heizanlage nach Anspruch 3, dadurch gekennzeichnet, dass an dem Heizkörper (8) ein Wärmeübertragungsblech angebracht ist, das sich nach oben zu den unteren Oeffnungen (6) des Fensterrahmens (3, 4, 5) erstreckt.

5. Heizanlage nach einem der Ansprüche 1 bis 4, dadurch gekennzeichnet, dass der Kreislauf (11, 14) des Heizkörpers (8) an eine Kaltwasserquelle umschaltbar ist.

6. Heizanlage nach einem der Ansprüche 1 bis 5, dadurch gekennzeichnet, dass im Kreislauf (11, 14) des Heizkörpers (8) nach dem Heizkörper und vor dem Boiler (13) ein Wasserspeicher (15) angeordnet ist, an welchen eine Entnahmeleitung (17, 19) für warmes Brauchwasser angeschlossen ist.

7. Heizanlage nach Anspruch 6, gekennzeichnet durch einen Temperaturmessfühler zum Feststellen der Temperatur des Wassers im Wasserspeicher (15) und

0172264

Steuern eines Reglers für die Boilerheizeinrichtung
in Abhängigkeit von dieser Temperatur.

# Fig. 1

# Fig. 2

# EUROPÄISCHER RECHERCHENBERICHT

Europäisches Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-B-2 706 968 (SCHMIDT-REUTER INGENIEURGESELLSCHAFT) * Insgesamt * | 1 | F 24 D 3/08 F 24 F 5/00 |
| | --- | | |
| Y | DE-A-1 454 396 (EIFFERT) * Seite 4, Absatz 6 - Seite 5, Absatz 1 * | 1 | |
| A | * Seite 1, Absatz 1 * | 2 | |
| | --- | | |
| A | DE-U-7 300 836 (GEBRÜDER SULZER AG) * Figur 1 * | 3,4 | |
| | --- | | |
| A | DE-A-2 638 746 (KOPONEN) * Figur 2, Positionen 2,6 * | 3,4 | RECHERCHIERTE SACHGEBIETE (Int Cl 4) |
| | --- | | |
| A | FR-A-1 388 943 (GENERALE THERMIQUE) * Figur, Positionen 20,21 * | 5 | F 24 D 3/00 F 24 D 5/00 F 24 F 5/00 F 24 F 7/00 |
| | ----- | | |

Der vorliegende Recherchenbericht wurde für alle Patentansprüche erstellt

| Recherchenort BERLIN | Abschlußdatum der Recherche 01-04-1985 | Prüfer PIEPER C |
|---|---|---|